(19) Europäisches Patentamt
European Patent Office
Office européen des brevets

(11) EP 1 333 075 A1

(12) **EUROPEAN PATENT APPLICATION**
published in accordance with Art. 158(3) EPC

(43) Date of publication:
**06.08.2003 Bulletin 2003/32**

(21) Application number: **01976728.4**

(22) Date of filing: **18.10.2001**

(51) Int Cl.[7]: **C09D 163/00**, C09D 161/00, B05D 7/14

(86) International application number:
**PCT/JP01/09136**

(87) International publication number:
**WO 02/034846 (02.05.2002 Gazette 2002/18)**

(84) Designated Contracting States:
**AT BE CH CY DE DK ES FI FR GB GR IE IT LI LU MC NL PT SE TR**

(30) Priority: **20.10.2000 JP 2000321090**
**27.11.2000 JP 2000359861**

(71) Applicant: **KANSAI PAINT CO., LIMITED**
**Amagasaki-shi Hyogo 661-0964 (JP)**

(72) Inventors:
- **INOMATA, Keiji**
**Hiratsuka-shi, Kanagawa 254-0071 (JP)**
- **HIROSE, Yuji**
**Hiratsuka-shi, Kanagawa 254-8562 (JP)**
- **YOKOI, Hideo**
**Hiratsuka-shi, Kanagawa 254-0017 (JP)**

(74) Representative: **Hucker, Charlotte Jane**
**Gill Jennings & Every**
**Broadgate House,**
**7 Eldon Street**
**London EC2M 7LH (GB)**

(54) **COATING COMPOSITION AND METHOD OF CAN INSIDE COATING**

(57) The present invention provides a coating composition comprising: (A) an epoxy resin having a number average molecular weight of 2,500 to 10,000, which is a reaction product of a specific low molecular weight cresol novolac epoxy resin (a) and a specific low molecular weight cresol novolac phenolic resin (b); and (B) at least one curing agent selected from the group consisting of a specific phenolic resin (c) and an amino resin (d); the proportions of the epoxy resin (A) and the curing agent (B), on a solid basis, relative to the combined weight of the two components being 60 to 98 wt.% of component (A) and 40 to 2 wt.% of component (B); and a method for coating the inner surface of can using this coating composition.



Printed by Jouve, 75001 PARIS (FR)

## Description

### TECHNICAL FIELD

The present invention relates to a coating composition and a method for coating the inner surface of can.

### BACKGROUND ART

Conventionally, coating compositions comprising a bisphenol-A epoxy resin and a phenolic resin curing agent are widely used as organic solvent coating compositions for coating the inner surface of cans such as a food can.
However, such conventional coating compositions have the problem that bisphenol A, a known environmental hormone, leaches from the coating film.
Therefore, currently desired strongly is the development of a coating composition capable of forming a coating film from which bisphenol A does not leach and thus suitable for coating the inner surface of can.

### DISCLOSURE OF THE INVENTION

An object of the present invention is to provide a coating composition capable of forming a coating film which achieves excellent coating performance such as processability and flavor retention and from which bisphenol A does not leach. Another object is to provide a method for coating the inner surface of can.
Other objects and features of the invention will become apparent from the following description.
The present invention provides the following coating compositions and methods for coating the inner surface of cans using the coating compositions.

1. A coating composition comprising:

(A) an epoxy resin having a number average molecular weight of 2,500 to 10,000, which is a reaction product of (a) a low molecular weight cresol novolac epoxy resin comprising 70 wt.% or more of the compound of formula (1) and (b) a low molecular weight cresol novolac phenolic resin comprising 75 wt.% or more of the compound of formula (2)

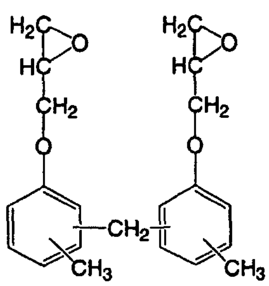
(1)

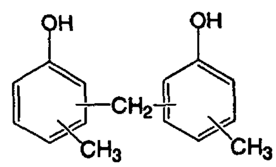
(2)

; and
(B) at least one curing agent selected from the group consisting of (c) a phenolic resin obtained by the reaction of formaldehyde with a phenol other than bisphenol A and (d) an amino resin,

the proportions of the epoxy resin (A) and the curing agent (B), on a solid basis, relative to the combined weight of the two components being 60 to 98 wt.% of component (A) and 40 to 2 wt.% of component (B).
2. The coating composition according to item 1 wherein the compound of formula (1) comprises 70 wt.% or more of the compound of formula (3)

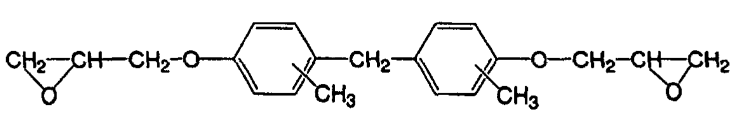
(3)

and the compound of formula (2) comprises 70 wt.% or more of the compound of formula (4)

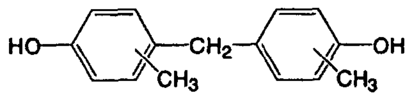

(4)

3. The coating composition according to item 1 wherein the low molecular weight cresol novolac epoxy resin (a) is a low molecular weight orthocresol novolac epoxy resin and the low molecular weight cresol novolac phenolic resin (b) is a low molecular weight orthocresol novolac phenolic resin.
4. The coating composition according to item 1 wherein the amino resin (d) is at least one member selected from the group consisting of methylolated amino resins and etherified resins obtained by alkylation of methylolated amino resins with an alcohol.
5. A method for coating the inner surface of can which comprises applying the coating composition of item 1 to the inner surface of a formed can and baking the coating.
6. A method for coating the inner surface of can which comprises:

applying the coating composition of item 1 to a flat metal plate and baking the coating; and
forming the flat plate into a can in such a manner that the cured coating surface of the plate becomes the inner surface of the can.

The present inventors carried out intensive research to achieve the above objects and found the following:

a coating composition comprising the above specified epoxy resin (A) and curing agent (B) is capable of forming a coating film which achieves excellent coating performance such as processability and flavor retention and from which disphenol A does not leach; and
this coating composition is suitable for coating the inner surface of can. The present invention was accomplished based on these findings.

The coating composition of the invention and the method for coating the inner surface of can using this composition will be described in more detail below.

Epoxy resin (A)

The epoxy resin (A) used in the invention is a reaction product of (a) a low molecular weight cresol novolac epoxy resin comprising 70 wt.% or more of the compound of formula (1) and (b) a low molecular weight cresol novolac phenolic resin comprising 75 wt.% or more of the compound of formula (2), and has a number average molecular weight of 2,500 to 10,000. The coating composition comprising the epoxy resin (A) has high storage stability and provides a coating film with excellent processability.
In contrast, commercially available cresol novolac epoxy resins generally have the structure of formula (5)

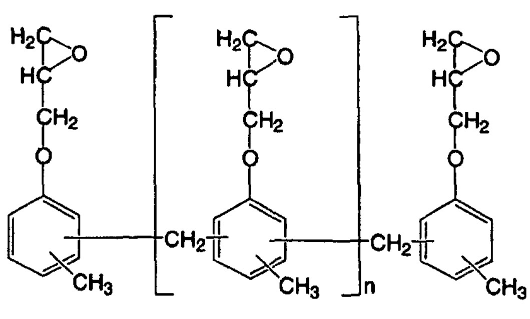

(5)

wherein n is usually in the range of 3 to 6, and therefore have a large number of epoxy groups per molecule. The coating compositions containing such epoxy resins have low storage stability and provides a coating film with poor processability.
Ideally, the epoxy resin (A) is produced by a polyaddition reaction between the compound of formula (5) wherein n=0, i.e., the compound of formula (1) having two epoxy groups and two benzene nuclei per molecule and the

compound of formula (2) having two phenolic hydroxyl groups and two benzene nuclei per molecule as shown in the following Reaction Scheme:

<Reaction Scheme>

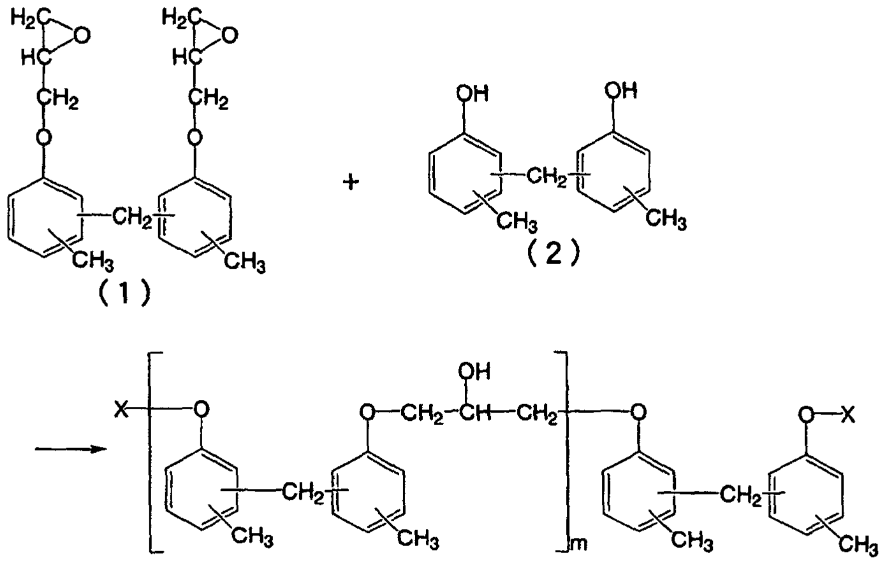

(1)

(2)

(6)

In the above Reaction Scheme, the reaction product epoxy resin (A) is represented by formula (6) in which two Xs independently represent a hydrogen atom or a glycidyl group and m is an integer of 1 or more, preferably 8 to 50.

It is difficult to inexpensively commercially obtain a pure compound of formula (1) and a pure compound of formula (2), the starting materials. Thus both the commercially available compounds (1), (2) contain components having one benzene nucleus or three or more benzene nuclei per molecule.

Therefore, in reality, the epoxy resin (A) is produced by reacting a low molecular weight cresol novolac epoxy resin (a) comprising 70 wt.% or more, preferably 80 wt.% or more, of a binuclear compound of formula (1) shown below and a low molecular weight cresol novolac phenolic resin (b) comprising 75 wt.% or more, preferably 85 wt.% or more, of a binuclear compound of formula (2) shown below.

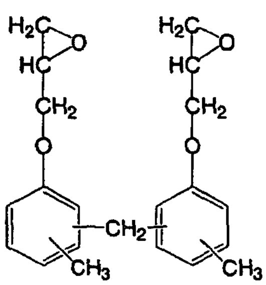

(1)

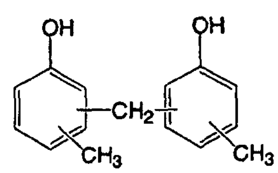

(2)

When the epoxy resin (a) and the phenolic resin (b) contain a large amount of compounds having three or more benzene nuclei per molecule, the resulting coating composition provides a coating film with poor processability. On the other hand, when the epoxy resin (a) and the phenolic resin (b) contain a large amount of a compound having one benzene nucleus, the obtained epoxy resin (A) contains a large proportion of a low molecular weight component, resulting in poor coating performance with respect to hygiene, flavor retention, processability and corrosion resistance, i.e., the properties required of coating compositions for coating the inner surface of can.

In view of the coating performance of the coating composition such as processability and corrosion resistance, it is preferable that in the low molecular weight cresol novolac epoxy resin (a), the compound of formula (1) comprises 70 wt.% or more, preferably 85 wt.% or more, of the compound of formula (3), which is a 4,4'-substitution product of the compound of formula (1), and in the low molecular weight cresol novolac phenolic resin (b), the compound of

formula (2) comprises 70 wt.% or more, preferably 85 wt.% or more, of the compound of formula (4), which is a 4,4'-substitution product of the compound of formula (2).

The positions of the methyl groups in the low molecular weight cresol novolac epoxy resin (a) and the low molecular weight cresol novolac phenolic resin (b) are not specifically limited. However, in view of production stability, it is preferable that both of resins (a), (b) are orthocresol resins having methyl groups in the ortho positions.

The reaction between the low molecular weight cresol novolac epoxy resin (a) and the low molecular weight cresol novolac phenolic resin (b) is preferably carried out in an organic solvent, although it can also be preformed without the use of solvents. The reaction temperature is preferably in the range of 120°C to 200°C, particularly 130°C to 170°C. Any organic solvent can be used as long as the solvent can dissolve or disperse the starting materials and does not severely inhibit the reaction. Examples thereof include various organic solvents such as hydrocarbon solvents, ketone solvents, ether solvents and ester solvents.

When carrying out this reaction, the proportions of components (a) and (b) are preferably such that 0.7 to 1.4 moles, particularly 0.95 to 1.15 moles, of epoxy groups in the low molecular weight cresol novolac epoxy resin (a) be present per mole of phenolic hydroxyl groups in the low molecular weight cresol novolac phenolic resin (b) .

One or more catalysts can also be used in order to promote this reaction. Examples of useful catalysts include tetraethylammonium bromide, tetramethylammonium chloride, tetramethylammonium hydroxide, caustic soda, sodium carbonate, tributylamine, dibutyltin oxide and the like. These catalysts are preferably used in an amount of 10,000 ppm or less, relative to the combined weight of the low molecular weight cresol novolac epoxy resin (a) and the low molecular weight cresol novolac phenolic resin (b).

In view of flavor retention, processability and corrosion resistance, it is preferable that epoxy resin (A) have a number average molecular weight of 2,500 to 10,000, preferably 3,000 to 6,000.

<u>Curing agent (B)</u>

The curing agent (B) used in the invention functions as a curing agent for the epoxy resin (A). Used as curing agent (B) is at least one member selected from the group consisting of a phenolic resin (c) obtained by the reaction of formaldehyde with a phenol other than bisphenol A, and an amino resin (d).

Phenols other than bisphenol A which are free of food hygiene problems can preferably be used to produce the phenolic resin (c). Examples of such phenols include phenols having 1 benzene ring per molecule, such as phenol, methylphenol, ethylphenol, n-propyl phenol, isopropylphenol, n-butylphenol, p-tert-butylphenol, p-tert-amylphenol, o-cresol, m-cresol, p-cresol, p-cyclohexylphenol, p-octyl phenol and xylenol; phenols having 2 benzene rings per molecule, such as p-phenylphenol, bisphenol F, 1,1-bis(4-hydroxyphenyl)ethane, 2,2-bis(4-hydroxyphenyl)butane, bis(4-hydroxyphenyl)-1,1-isobutane, bis(4-hydroxy-tert-butyl-phenyl)-2,2-propane, p-(4-hydroxyphenyl)phenol, oxybis(4-hydroxyphenyl), sulfonylbis(4-hydroxyphenyl), and 4,4'-dihydroxybenzophenone; and bis(2-hydroxynaphthyl)methane.

Of these phenols, preferred are phenols having 1 benzene ring per molecule. Especially preferred are phenol, n-butylphenol, p-tert-butylphenol, o-cresol, m-cresol, p-cresol and xylenol.

The reaction between a phenol and formaldehyde to produce the phenolic resin (c) can be carried out according to known reaction methods for preparing phenolic resins. This reaction can be carried out in a solvent in the presence of a reaction catalyst, if necessary.

Although the phenolic resin (c) may be a resol or novolac phenolic resin, use of a resol phenolic resin is preferred in view of the curability of the resulting composition.

Examples of resins used as the amino resin (d) are methylolated amino resins obtained by the reaction of an aldehyde with an amino compound such as melamine, urea, benzoguanamine, acetoguanamine, steroguanamine, spiroguanamine and dicyandiamide; and etherified resins obtained by alkylation of methylolated amino resins with an alcohol. Especially preferred are etherified resins obtained by subjecting at least some of the methylol groups to alkylation.

Examples of useful aldehydes include formaldehyde, paraformaldehyde, acetaldehyde and benzaldehyde. Examples of alcohols that can be used for the alkylation of methylol groups include methanol, ethanol, n-propyl alcohol, i-propyl alcohol, n-butyl alcohol, i-butyl alcohol, 2-ethylbutanol and 2-ethylhexanol.

Curing catalysts can also be used with the curing agent (B) selected from the phenolic resin (c) and the amino resin (d). Examples of such catalysts include phosphoric acid, sulfonic acid compounds, and amine neutralized sulfonic acid compounds.

Representative examples of sulfonic acid compounds include p-toluenesulfonic acid, dodecylbenzene sulfonic acid, dinonylnaphthalene sulfonic acid and dinonylnaphthalene disulfonic acid. The amine of the amine neutralized sulfonic acid compounds may be a primary, secondary or tertiary amine.

The amount of the curing catalyst is usually 5 parts by weight or less, preferably about 0.05 to 5 parts by weight, more preferably about 0.1 to 2 parts by weight, relative to 100 parts by weight of the combined weight of the epoxy resin (A) and the curing agent (B), on a solids basis.

In view of the curability of the coating composition and the processability, water resistance, corrosion resistance and flavor retention of the coating film, the coating composition of the invention should contain the following proportions of epoxy resin (A) and curing agent (B), relative to the combined weight of the two components, on a solids basis: 60 to 98 wt.% of component (A) and 40 to 2 wt.% of component (B). Preferably, the composition contains 70 to 95 wt.% of component (A) and 30 to 5 wt.% of component (B).

The coating composition of the invention may contain known coating additives, such as coating surface modifiers, waxes, color pigments, extender pigments, modified resins and foaming inhibitors. A foaming inhibitor inhibits the foaming of the coating during the heating process of baking. For example, benzoin can be used as a foaming inhibitor.

The coating composition of the invention is usually used as an organic solvent coating composition. This composition can be prepared, for example, by dissolving or dispersing the essential components (A) and (B), optionally with a variety of additives, in a coating organic solvent. It is usually preferable for this composition to have a solids concentration of about 10 to 50 wt.%.

Examples of useful organic solvents include hydrocarbon solvents such as toluene, xylene and high boiling point petroleum hydrocarbons; ketones such as methyl ethyl ketone, methyl isobutyl ketone, cyclohexanone and isophorone; esters such as ethyl acetate, butyl acetate, ethylene glycol monoethyl ether acetate and diethylene glycol monoethyl ether acetate; alcohol solvents such as methanol, ethanol and butanol; ether solvents such as ethylene glycol monoethyl ether, ethylene glycol monobutyl ether, and diethylene glycol monobutyl ether. These organic solvents can be used singly or in combinations of two or more.

The coating composition of the invention has good curability and is capable of forming a coating film which has excellent processability and high flavor retention and from which bisphenol A does not leach. Thus the coating composition is suitable for coating the inner and outer surfaces of can, especially for coating the inner surface of can.

Method for coating the inner surface of can

The coating method according to the first embodiment of the invention comprises applying the coating composition of the invention to the inner surface of a formed can and baking the coating (hereinafter referred to as "coating method I"). The coating method according to the second embodiment of of the invention comprises applying the coating composition of the invention to a flat metal plate and baking the coating, and then forming the flat plate into a can in such a manner that the cured coating surface of the plate becomes the inner surface of the can (hereinafter referred to as "coating method II"). According to these coating methods of the invention, there can advantageously be formed on the inner surface of can a coating film which achieves excellent processability and high flavor retention and from which bisphenol A does not leach.

The can used in coating method I can be prepared, for example, by forming into a can a flat metal plate such as a non-treated steel plate, a tin plated steel plate, a galvanized steel plate, a chrome plated steel, a phosphate treated steel plate, a chromate treated steel plate, a non-treated aluminum plate or a chromate treated aluminum plate. The flat metal plate used in coating method II can be one of the above-mentioned plates, i.e., the materials used in the preparation of the can in coating method I.

In the above method I, the coating composition can be applied to the inner surface of cans by a coating method such as spray coating. In method II, the coating composition can be applied to a flat metal plate by a coating method such as spray coating, roll coater coating, curtain flow coater coating or die coater coating.

In both of methods I and II, it is appropriate that the cured coating thickness be within the range of about 2 to 20 μm, preferably about 5 to 15 μm. The conditions for baking the coating are not particularly restricted as long as they are conditions under which the coating cures. The coating is usually baked at about 140°C to 350°C for about 7 to about 180 seconds to form a cured coating.

According to method I, an inside-coated can is produced upon baking. According to method II, an inside coated can is produced after baking, by forming a flat metal plate into a can in such a manner that the cured coating surface of the flat plate becomes the inside surface of the can.

BEST MODE FOR CARRYING OUT THE INVENTION

The following Production Examples, Examples and Comparative Examples are provided to illustrate the present invention in further detail. In these examples, parts and percentages are all by weight.

Production of epoxy resin (A)

Production Example 1

The following starting materials were placed in a reaction vessel.

| | |
|---|---|
| Ethylene glycol Orthocresol novolac epoxy resin (epoxy equivalent: 190, binuclear compound purity: 88%, | 111 parts |
| 4,4'-substitution product content: 95%) Orthocresol novolac phenolic resin (molecular weight: 240, binuclear compound purity: 88%, | 640 parts |
| 4,4'-substitution product content: 95%) Aqueous solution of 50% tetramethylammonium | 360 parts |
| chloride | 1.2 parts |

The resulting mixture was heated to 140°C with stirring and maintained at the same temperature for 7 hours, giving an epoxy resin solution (A1) with a solids content of 90%. The resin had an epoxy equivalent of about 2,600 and a number average molecular weight of about 3,800.

Production Example 2

The following starting materials were placed in a reaction vessel:

| | |
|---|---|
| Ethylene glycol Orthocresol novolac epoxy resin (epoxy equivalent: 190, binuclear compound purity: 88%, | 111 parts |
| 4,4'-substitution product content: 85%) Orthocresol novolac phenolic resin (molecular weight: 240, binuclear compound purity: 88%, | 640 parts |
| 4,4'-substitution product content: 85%) Aqueous solution of 50% tetramethylammonium | 360 parts |
| chloride | 1.2 parts |

The resulting mixture was heated to 140°C with stirring and maintained at the same temperature for 7 hours, giving an epoxy resin solution (A2) with a solids content of 90%. The resin had an epoxy equivalent of about 2,800 and a number average molecular weight of about 4,000.

Production Example 3

The following starting materials were placed in a reaction vessel:

| | |
|---|---|
| Ethylene glycol Orthocresol novolac epoxy resin (epoxy equivalent: 190, binuclear compound purity: 88%, | 111 parts |
| 4,4'-substitution product content: 85%) | 640 parts |
| Paracresol novolac phenolic resin (molecular weight: 240, binuclear compound purity: 90%) Aqueous solution of 50% tetramethylammonium | 360 parts |
| Chloride | 1.2 parts |

The resulting mixture was heated to 140°C with stirring and maintained at the same temperature for 7 hours, giving an epoxy resin solution (A3) with a solids content of 90%. The resin had an epoxy equivalent of about 2,500 and a number average molecular weight of about 3,700.

Production Example 4

The following starting materials were placed in a reaction vessel:

| | |
|---|---|
| Cyclohexanone Orthocresol novolac epoxy resin (epoxy equivalent: 190, binuclear compound purity: 88%, | 111 parts |
| 4,4'-substitution product content: 95%) Orthocresol novolac phenolic resin (molecular weight: 240, binuclear compound purity: 88%, | 620 parts |

(continued)

| | |
|---|---|
| 4,4'-substitution product content: 95%) Aqueous solution of 50% tetramethylammonium chloride | 360 parts<br>1.2 parts |

The resulting mixture was heated to 140°C with stirring and maintained at the same temperature for 7 hours, giving an epoxy resin solution (A4) with a solids content of 90%. The resin had an epoxy equivalent of about 3,500 and a number average molecular weight of about 6,000.

Production Example 5

The following starting materials were placed in a reaction vessel:

| | |
|---|---|
| Cyclohexanone Orthocresol novolac epoxy resin (epoxy equivalent: 190, binuclear compound purity: 88%, | 111 parts |
| 4,4'-substitution product content: 95%) Orthocresol novolac phenolic resin (molecular weight: 240, binuclear compound purity: 88%, | 835 parts |
| 4,4'-substitution product content: 95%) Aqueous solution of 50% tetramethylammonium chloride | 360 parts<br>1.2 parts |

The resulting mixture was heated to 140°C with stirring and maintained at the same temperature for 7 hours, giving a comparative epoxy resin solution (C1) with a solids content of 90%. The resin had an epoxy equivalent of about 800 and a number average molecular weight of about 1,500.

Production Example 6

The following starting materials were placed in a reaction vessel:

| | |
|---|---|
| Cyclohexanone Orthocresol novolac epoxy resin (epoxy equivalent: 190, binuclear compound purity: 88%, | 111 parts |
| 4,4'-substitution product content: 95%) Orthocresol novolac phenolic resin (molecular weight: 240, binuclear compound purity: 88%, | 600 parts |
| 4,4'-substitution product content: 95%) Aqueous solution of 50% tetramethylammonium chloride | 360 parts<br>1.2 parts |

The resulting mixture was heated to 140°C with stirring and maintained at the same temperature for 7 hours, giving a comparative epoxy resin solution (C2) with a solids content of 90%. The resin had an epoxy equivalent of about 6,000 and a number average molecular weight of about 13,000.

<u>Production of coating compositions</u>

Example 1

| | |
|---|---|
| Epoxy resin solution (A1) 83.3 parts (solids | 75 parts) |
| Hitanol 3305N | 59.5 parts (solids 25 parts) |
| Topco S923 | 0.1 part |
| Modaflow | 0.15 part |
| Phosphoric acid | 0.5 part |

The above components were added to a mixed solvent of methyl ethyl ketone : methyl isobutyl ketone : xylene : butyl cellosolve = 1:2:1:1 (weight ratio) in a paint shaker to achieve a solids content of 25% and well shaken and mixed to give a coating composition.

Hitanol 3305N (trade name, product of Hitachi Chemical Company Ltd.) is a cresol/p-tert-butyl phenol/formaldehyde type phenolic resin solution with a solids content of about 42%. Topco S923 (trade name, product of Toyo

Petrolite Co., Ltd.,) is a microcrystalline wax with a solids content of 100%. Modaflow (trade name, product of Monsanto Company, U.S.A.) is a flow modifier of an acrylic resin oligomer with a solids content of 100%. Examples 2-17 and Comparative Examples 1-5

Coating compositions with a solids content of 25% were prepared in the same manner as in Example 1 except that the components shown in Table 1 and the mixed solvent of Example 1 were used.

Table 1

| | Example | | | | | | | | | | |
|---|---|---|---|---|---|---|---|---|---|---|---|
| | 1 | 2 | 3 | 4 | 5 | 6 | 7 | 8 | 9 | 10 | 11 |
| Epoxy resin solution (A1) | 75 | 75 | | 75 | 75 | 85 | 85 | | 85 | 85 | |
| Epoxy resin solution (A2) | | | 75 | | | | | 85 | | | |
| Epoxy resin solution (A3) | | | | | | | | | | | |
| Epoxy resin solution (A4) | | | | | | | | | | | 80 |
| Epoxy resin solution (C1) | | | | | | | | | | | |
| Epoxy resin solution (C2) | | | | | | | | | | | |
| Epikote 1009 (*1) | | | | | | | | | | | |
| Hitanol 3305N (*2) | 25 | 25 | 25 | | | 15 | 15 | 15 | | | 20 |
| Durite P-97 (*3) | | | | 25 | | | | | 15 | | |
| Varcum 29-101 (*4) | | | | | 25 | | | | | 15 | |
| Tesazine 3003-60 (*5) | | | | | | | | | | | |
| Cymel 303 (*6) | | | | | | | | | | | |
| Phenodur PR-401 (*7) | | | | | | | | | | | |
| Phosphoric acid | 0.5 | | 0.5 | 0.5 | 0.5 | 0.5 | | 0.5 | 0.5 | 0.5 | 0.5 |
| Nacure 5925 (*8) | | 2.0 | | | | | 2.0 | | | | |
| Topco S923 (*9) | 0.1 | 0.1 | 0.1 | 0.1 | 0.1 | 0.1 | 0.1 | 0.1 | 0.1 | 0.1 | 0.1 |
| Modaflow (*10) | 0.15 | 0.15 | 0.15 | 0.15 | 0.15 | 0.15 | 0.15 | 0.15 | 0.15 | 0.15 | 0.15 |

Table 1 (continued)

| | Example | | | | | | Comparative Example | | | | |
|---|---|---|---|---|---|---|---|---|---|---|---|
| | 12 | 13 | 14 | 15 | 16 | 17 | 1 | 2 | 3 | 4 | 5 |
| Epoxy resin solution (A1) | | | | 85 | 85 | | 50 | | | | |
| Epoxy resin solution (A2) | | | | | | | | | | | |
| Epoxy resin solution (A3) | | | | | | 75 | | | | | |
| Epoxy resin solution (A4) | 80 | 80 | 80 | | | | | | | | |
| Epoxy resin solution (C1) | | | | | | | | 75 | | | |
| Epoxy resin solution (C2) | | | | | | | | | 75 | | |
| Epikote 1009 (*1) | | | | | | | | | | 75 | 75 |
| Hitanol 3305N (*2) | 20 | | | | | 25 | 50 | 25 | 25 | 25 | |
| Durite P-97 (*3) | | 20 | | | | | | | | | |
| Varcum 29-101 (*4) | | | 20 | | | | | | | | |
| Tesazine 3003-60 (*5) | | | | 15 | | | | | | | |
| Cymel 303 (*6) | | | | | 15 | | | | | | |
| Phenodur PR-401 (*7) | | | | | | | | | | | 25 |
| Phosphoric acid | | 0.5 | 0.5 | 0.5 | 0.5 | 0.5 | 0.5 | 0.5 | 0.5 | 0.5 | 0.5 |
| Nacure 5925 (*8) | 2.0 | | | | | | | | | | |
| Topco S923 (*9) | 0.1 | 0.1 | 0.1 | 0.1 | 0.1 | 0.1 | 0.1 | 0.1 | 0.1 | 0.1 | 0.1 |
| Modaflow (*10) | 0.15 | 0.15 | 0.15 | 0.15 | 0.15 | 0.15 | 0.15 | 0.15 | 0.15 | 0.15 | 0.15 |

In Table 1, the amounts of the components are expressed in terms of "parts". The amounts of the epoxy resin solutions, Epikote 1009 and curing agents (Hitanol 3305N, Durite P-97, Varcum 29-101, Tesazine 3003-60, Cymel 303 and Phenodua PR-401) are calculated on a solids basis.

In Table 1, the notes (*1) to (*10) mean the following:

(*1) Epikote 1009: trade name, product of Japan Epoxy Resins Co., Ltd., a bisphenol A epoxy resin, epoxy equivalent: 2,400 to 3,300, number average molecular weight: 3,750, solids: 100%.

(*2) Hitanol 3305N: trade name, product of Hitachi Chemical Co., Ltd., a resol phenolic resin solution obtained by reacting cresol, p-tert-butylphenol and formaldehyde, solids: about 42%.

(*3) Durite P-97: trade name, product of Borden Chemical, Inc., a resol phenolic resin solution obtained by reacting

cresol and formaldehyde, solids: about 50%.
(*4) Varcum 29-101: trade name, product of BTL Specialty Resins Corp., a resol phenolic resin solution obtained by reacting xylenol and formaldehyde, solids: 100%.
(*5) Tesazin 3003-60: trade name, product of Hitachi Kasei Polymer Co., Ltd., a butylated urea resin, solids: 60%.
(*6) Cymel 303: trade name, product of Mitsui Cytec, Ltd., a methylated melamine resin, solids: 100%.
(*7) Phenodur PR-401: trade name, product of Vianova Resins Inc., a bisphenol A phenolic resin, solids: 70%.
(*8) Nacure 5925: trade name, product of King Industries, Inc., an amine neutralized solution of dodecyl benzene sulfonic acid, active ingredients: 25%.
(*9) Topco S923: trade name, product of Toyo Petrolite Co., Ltd., a microcrystalline wax, solids: 100%.
(*10) Modaflow: trade name, product of Monsanto Company, U.S.A., a flow modifier of an acrylic resin oligomer, solids: 100%.

Method for preparing test samples

(1) Preparation of coated plates for testing coated surface appearance, gel fraction, processability, water resistance, adhesion, and adhesion after the water resistance test

The coating compositions prepared in Examples 1-17 and Comparative Examples 1-5 were applied to #25 tin plates to a thickness of about 15 μm (when cured) using a bar coater and baked at 200°C to 210°C for 30 seconds to produce coated plates.

(2) Preparation of two-piece cans for testing corrosion resistance and flavor retention

The inner surfaces of 250 cc two-piece steel cans were coated with the coating compositions prepared in Examples 1-17 and Comparative Examples 1-5 by hot air-spray coating to give a coating of about 15 μm thickness (when cured) and baked at 215°C for 60 seconds to produce two-piece can bodies.

(3) Preparation of inside-coated cans for testing bisphenol A leaching

The inner surfaces of 350 cc two-piece steel cans were evenly spray coated with the coating compositions prepared in Examples 1-17 and Comparative Examples 1-5 to a coating weight of 100 mg/100 $cm^2$ (when cured) and baked at 200°C to 210°C for 60 seconds to produce inside-coated cans.

Test methods

The tests for coated surface appearance, gel fraction, processability, water resistance, adhesion, adhesion after the water resistance test, corrosion resistance, flavor retention and bisphenol A leaching were carried out according to the following methods:

Coated surface appearance: The coated surfaces of the coated plates were observed by the naked eye and evaluated according to the following criteria:

A: The coated surface is smooth and no foaming is observed.
B: The surface is slightly rough or uneven and small foaming bubbles are observed.
C: The surface is slightly rough or uneven and large foaming bubbles are observed.

Gel fraction: The coated plates were placed in flasks. Methyl ethyl ketone was added in an amount of 100 cc/100 $cm^2$ of the coated area of the coated plates and extraction was carried out with heating and refluxing for 1 hour. Then the coated plates were taken out, dried at 120°C for 30 minutes and cooled to room temperature. Gel fraction (%) was calculated by the following equation:

$$\text{Gel fraction (\%)} = [(W_3-W_1)/(W_2-W_1)] \times 100$$

wherein $W_1$ is the weight of the tin plate before coating, $W_2$ the weight of the coated plate before extraction, and $W_3$ the weight of the coated plate after extraction.

Processability: The coated plates were bent 180 degrees (folded in half) with the coated side out. A 1 kg iron weight having a flat contact surface was dropped onto the bent portion of the coated plates from a height of 50 cm using a folding type Du-Pont impact tester and the length of the resulting crack was measured. The results were evaluated according to the following criteria:

A: Less than 5 mm,
B: 5 mm or more but less than 10 mm,
C: 10 mm or more but less than 20 mm,
D: 20 mm or more.

Water resistance: The coated plates were soaked in deionized water and placed in an autoclave at 1.45 MPa at 125°C. Thirty-five minutes later, the plates were taken out and the coating was inspected for blushing. The results were evaluated according to the following criteria:

A: No blushing of the coating,
B: Slight blushing,
C: Considerable blushing,
D: Extreme blushing.

Coating adhesion: Eleven lengthwise and eleven crosswise cuts with a spacing of about 1.5 mm were made on each coated plate with a knife, resulting in a checkerboard patten. A 24-mm wide adhesive cellophane tape was applied to the cut surface of the plates and then peeled off. The cut surface of the coated plate was observed and evaluated according to the following criteria:

A: No peeling of the coating,
B: Slight peeling,
C: Considerable peeling,
D: Extreme peeling.

Coating adhesion after water resistance test: The coated plates were soaked in deionized water, placed in an autoclave at 1.45 MPa at 125°C and taken out 35 minutes later. The coating adhesion was then tested and evaluated in the same manner as in the above coating adhesion test.

Corrosion resistance: 10% pineapple juice was hot packed into the can bodies at 98°C. The can bodies were hermetically sealed and stored at 37°C for 6 months. The cans were cut open and inspected for the inside corrosion. The results were evaluated according to the following criteria:

A: No corrosion,
B: Slight corrosion,
C: Considerable corrosion,
D: Extreme corrosion.

Flavor retention: Tap water (250 cc) treated with activated carbon was poured into the can bodies. The can bodies were hermetically sealed and sterilized at 125°C for 30 minutes. After the cans were stored at 37°C for 6 months, flavor retention was tested. The results were evaluated according to the following criteria:

A: No change in flavor,
B: Slight change in flavor,
C: Considerable change in flavor,
D: Extreme change in flavor,

Bisphenol A leaching test: Distilled water (340 cc) was poured into the inside-coated cans. The cans were hermetically sealed and treated at 125°C for 30 minutes. The concentration (ppb) of bisphenol A in the distilled water was measured by high performance liquid chromatography.

Table 2 shows the results.

Table 2

| | Example | | | | | | | | | | |
|---|---|---|---|---|---|---|---|---|---|---|---|
| | 1 | 2 | 3 | 4 | 5 | 6 | 7 | 8 | 9 | 10 | 11 |
| Coated surface appearance | A | A | A | A | A | A | A | A | A | A | A |
| Gel fraction (%) | 81 | 80 | 82 | 83 | 79 | 80 | 79 | 81 | 82 | 78 | 79 |
| Processability | B | B | B | B | B | A | A | A | A | A | A |
| Water resistance | A | A | A | A | A | A | A | A | A | A | A |
| Coating adhesion | A | A | A | A | A | A | A | A | A | A | A |
| Coating adhesion after water resistance test | B | A | A | B | B | A | A | A | A | A | A |
| Corrosion resistance | A | A | A | A | A | A | A | A | A | B | A |
| Flavor retention | A | A | A | A | B | A | A | A | A | B | A |
| Bisphenol A concentration (ppb) | Not detected | | | | | | | | | | |

Table 2 (continued)

| | Example | | | | | | Comparative Example | | | | |
|---|---|---|---|---|---|---|---|---|---|---|---|
| | 12 | 13 | 14 | 15 | 16 | 17 | 1 | 2 | 3 | 4 | 5 |
| Coated surface appearance | A | A | A | A | A | A | A | A | A | A | A |
| Gel fraction (%) | 78 | 81 | 77 | 79 | 91 | 79 | 92 | 88 | 62 | 91 | 90 |
| Processability | A | A | A | A | A | B | D | D | C | A | A |
| Water resistance | A | A | A | A | A | B | C | C | D | A | A |
| Coating adhesion | A | A | A | A | A | B | D | D | C | A | A |
| Coating adhesion after water resistance test | A | A | A | A | A | B | D | D | D | A | A |
| Corrosion resistance | A | A | A | B | B | B | D | D | D | A | A |
| Flavor retention | A | A | B | B | B | A | C | C | C | A | A |
| Bisphenol A concentration (ppb) | Not detected | | | | | | | | | 5 | 40 |

The coating composition of the invention has excellent curability and forms a coating film which is excellent in coated surface appearance, processability, water resistance, coating adhesion, coating adhesion after the water resistant test, corrosion resistance, and flavor retention and from which bisphenol A does not leach. Therefore, this coating composition is highly useful for coating the inner surface of can such as a food can.

## Claims

**1.** A coating composition comprising:

(A) an epoxy resin having a number average molecular weight of 2,500 to 10,000, which is a reaction product of (a) a low molecular weight cresol novolac epoxy resin comprising 70 wt.% or more of the compound of formula (1) and (b) a low molecular weight cresol novolac phenolic resin comprising 75 wt.% or more of the compound of formula (2)

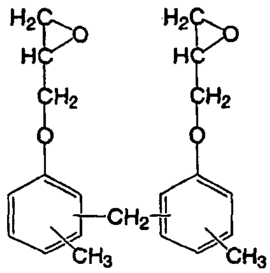 (1) 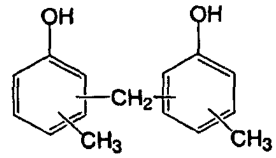 (2)

; and

(B) at least one curing agent selected from the group consisting of (c) a phenolic resin obtained by the reaction of formaldehyde with a phenol other than bisphenol A and (d) an amino resin;

the proportions of the epoxy resin (A) and the curing agent (B), on a solids basis, relative to the combined weight of the two components being 60 to 98 wt.% of component (A) and 40 to 2 wt.% of component (B).

**2.** The coating composition according to claim 1 wherein the compound of formula (1) comprises 70 wt.% or more of the compound of formula (3)

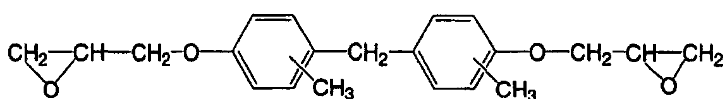 (3)

and the compound of formula (2) comprises 70 wt.% or more of the compound of formula (4)

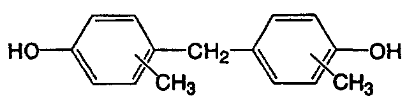 (4)

**3.** The coating composition according to claim 1 wherein the low molecular weight cresol novolac epoxy resin (a) is a low molecular weight orthocresol novolac epoxy resin and the low molecular weight cresol novolac phenolic resin (b) is a low molecular weight orthocresol novolac phenolic resin.

**4.** The coating composition according to claim 1 wherein the amino resin (d) is at least one member selected from the group consisting of methylolated amino resins and etherified resins obtained by alkylation of methylolated amino resins with an alcohol.

**5.** A method for coating the inner surface of can which comprises applying the coating composition of claim 1 to the inner surface of a formed can and baking the coating.

**6.** A method for coating the inner surface of can which comprises:

applying the coating composition of claim 1 to a flat metal plate and baking the coating; and
forming the flat plate into a can in such a manner that the cured coating surface of the plate becomes the inner surface of the can.

## INTERNATIONAL SEARCH REPORT

International application No.
PCT/JP01/09136

A. CLASSIFICATION OF SUBJECT MATTER
Int.Cl$^7$ C09D163/00 , C09D161/00 , B05D7/14

According to International Patent Classification (IPC) or to both national classification and IPC

B. FIELDS SEARCHED

Minimum documentation searched (classification system followed by classification symbols)
Int.Cl$^7$ C09D163/00, C09D161/00, C08L63/00 , B05D7/14

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 3-33169 A (KANSAI PAINT CO., LTD.), 13 February, 1991 (13.02.1991), Claims; example (Family: none) | 1-6 |
| A | JP 1-242178 A (NIPPON KAYAKU CO., LTD.), 27 September, 1989 (27.09.1989), Claims (Family: none) | 1-6 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 11 January, 2002 (11.01.02) | 22 January, 2002 (22.01.02) |
| Name and mailing address of the ISA/ Japanese Patent Office | Authorized officer |
| Facsimile No. | Telephone No. |

Form PCT/ISA/210 (second sheet) (July 1992)